# EUROPÄISCHE PATENTSCHRIFT

(11) **EP 2 178 959 B1**
(45) Veröffentlichungstag und Bekanntmachung des Hinweises auf die Patenterteilung: **19.01.2011**
(21) Anmeldenummer: 08785341.2
(22) Anmeldetag: 04.08.2008
(51) Int. Cl.: C08K 3/00, C08K 5/00, C08L 27/06

(54) **STABILISATORSYSTEM FÜR HALOGENHALTIGE POLYMERE**
STABILIZER SYSTEM FOR HALOGENATED POLYMERS
SYSTÈME STABILISATEUR POUR POLYMÈRES CONTENANT DES HALOGÈNES

(30) Priorität: 10.08.2007 DE 102007037795
(43) Veröffentlichungstag der Anmeldung: 28.04.2010
(73) Patentinhaber: Nabaltec AG, 92421 Schwandorf (DE)
(72) Erfinder: WEHNER, Wolfgang, 64673 Zwingenberg (DE); DAVE, Trupti, 64673 Zwingenberg (DE)
(74) Vertreter: Büchel, Edwin
(86) Internationale Anmeldenummer: PCT/EP2008/006412
(87) Internationale Veröffentlichungsnummer: WO 2009/021652

(56) Entgegenhaltungen:
- WO-A-03/082974
- WO-A-2006/136191
- DE-A1-102005 031 623
- DE-A1-102005 031 624
- DE-A1-102006 055 214

## Beschreibung

Die vorliegende Erfindung betrifft Stabilisatorsysteme für halogenhaltige Polymere sowie Zusammensetzungen und Gegenstände die Stabilisatorsysteme enthaltend und die Verwendung der Systeme und Zusammensetzungen.

Bekanntermaßen neigen halogenhaltige Kunststoffe bei thermischer Belastung während der Verarbeitung oder im Langzeitgebrauch zu unerwünschten Zersetzungs- und Abbaureaktionen. Dieses Problem kann durch den Einsatz von metallhaltigen Stabilisatoren gelöst werden, die den halogenhaltigen Polymeren vor oder während der Verarbeitung zugegeben werden. Zu den bekannten Stabilisatoren zählen Barium-Cadmium-, Blei-, Organozinn-, Barium-Zink- und Calcium-Zink-Stabilisatoren. Alle diese Stabilisatorgruppen sind jedoch schwermetallhaltig, was nachteilig im Hinblick auf deren Umweltverträglichkeit ist.

Aus besagten Gründen wurden in den letzten Jahren zunehmend schwermetallfreie sogenannte organische Systeme erarbeitet, die auch bereits vermarktet werden. Diese sind den festen Stabilisatoren zuzuordnen und werden aus Gründen der Umweltfreundlichkeit großenteils in kompaktierter Form gehandelt. Diese organisch basierten Systeme sind Mehrkomponentenmischungen, deren Hauptbestandteil meist der Substanzgruppe der Hydrotalcite (Magnesium-Aluminium-Hydroxycarbonate) zuzuordnen ist.

Diese Verbindungsklasse ist jedoch in der Herstellung, rohstoffbedingt, relativ teuer. Die Produktion ist ferner wegen der einzusetzenden Magnesium- und Aluminium-Salze mit einem erheblichen Abwasserballast verbunden.

Schwermetallfreie Hydrotalcit- bzw. Hydrocalumit (Katoit)- Zusammensetzungen mit PVC-Thermostabilisatorfunktion werden beispielsweise in EP 1 046 668 B1 und EP 0930 332 B1 beschrieben.

Daher ist die Suche nach preisgünstigeren Substanzen weiterhin erforderlich, deren Synthesen außerdem ressourcenschonend und umweltverträglich sein sollten. Calcium-monocarbonato-hydroxodialuminate sind aufgrund ihrer Rohstoffpreise als PVC-Thermostabilisatoren attraktiv. Ihre industrielle Herstellung ist jedoch mit großem Aufwand verbunden. In der deutschen Patentanmeldung mit der Anmeldenummer DE 10 2006 055214.8 ist ein Verfahren zur Herstellung dieser Verbindungsklasse beschrieben. Dieses Verfahren ermöglicht eine preisgünstige und umweltfreundliche Herstellung, da preisgünstige Rohstoffe verwendet werden und nur geringe Abwasserballaste anfallen.

Darüber sind koordinationspolymere Triethanolamin-Metall-Innerkomplexe als Additive für synthetische Polymere aus WO-A 2006/0136191 bekannt.

Trotz der vorhandenen Stabilisatorsysteme besteht ein Bedarf an alternativen Systemen, die verbesserte Stabilisatoreigenschaften sowie die oben genannten Vorteile aufweisen können.

Eine Aufgabe der vorliegenden Erfindung liegt somit in der Bereitstellung solcher Stabilisatorsysteme.

Die Aufgabe wird gelöst durch ein Stabilisatorsystem für halogenhaltige Polymere enthaltend als Komponente **(A)** Calcium-monocarbonato-hydroxodialuminat der Formel **(A)**

CaₘAl₂(OH)₆₊₂₍ₘ₋₁₎CO_{3*} n H₂O **(A),**

wobei **m** = 3,8 bis 4,2 und **n** = 0 bis 3 ist und
als Komponente **(B)** ein koordinationspolymeres Catena-2,2',2"-nitrilotrisethanol-perchlorato-Lithium oder -Natrium **(B1)** mit einer Monomereneinheit der Formel 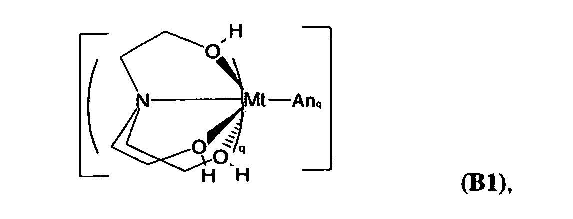 wobei **Mt** = Li oder Na, **An** = OClO₃ und **q** = 1 ist und/oder ein quaternäres oder ternäres Ammonium- oder Phosphoniumperchlorat **(B2).**

Es wurde nämlich gefunden, dass Kombinationen der Komponenten **(A)** und **(B)** zu einer Steigerung der Thermostabilisatorwirkung insbesondere in PVC führen. Diese wird noch weiter erhöht durch Zusatz von Komponenten **(C).**

Bei der Komponenten **(A)** handelt es sich um Calcium-monocarbonato-hydroxodialuminat der Formel **(A).** Deren Herstellung ist beispielsweise in der deutschen Patentanmeldung mit der Anmeldenummer DE 10 2006 055214.8 beschrieben.

Die Komponente **(B)** weist Verbindungen **(B1)** und/oder **(B2)** auf.

Die Verbindungen **(B1)** sind Koordinationspolymere und besitzen die Monomereneinheit 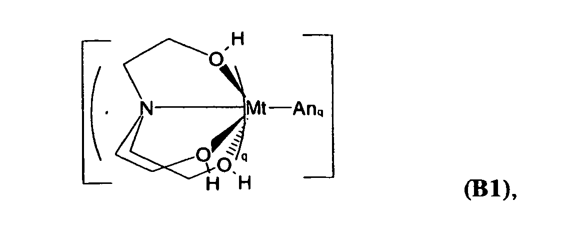 mit **Mt** = Li oder Na, **An** = OClO₃ und **q** = 1

Diese sind als solche sowie ihre Herstellung in WO-A 2006/0136191 beschrieben.

Bei den Verbindungen **(B2)** handelt es sich um quaternären bzw. ternären Ammonium- bzw. Phosphonium-Perchlorate.

Diese sind vorzugsweise Perchlorate der Formel R¹R²₃XClO₄ ist, wobei **X** P oder N, **R¹** H oder **R²** und jedes **R²** unabhängig voneinander ein gesättigter oder ungesättigter, verzweigter oder unverzweigter cyclischer oder acyclischer oder sowohl cyclischer als auch acyclischer Kohlenwasserstoffrest mit 1 bis 20 Kohlenstoffatomen ist.

Diese Quaternärsalze sind zugänglich durch Anionmetathese von Alkaliperchloraten (meist die Natriumverbindung) mit quaternären Ammonium- oder Phsophonium-Salzen (meist Halogenide oder Nitrate) in Wasser, wobei die quaternären Oniumperchlorate als filtrierbare Niederschläge anfallen. Die ternären Oniumperchlorate werden durch Protonierung der tertären Amine oder Phosphane mit wäßriger Perchlorsäure hergestellt.

Vorzugsweise weist die Komponente **(B)** einen Anteil von 1 bis 10 Gew.-% bezogen auf die Komponente **(A)** auf.

Weiterhin kann das erfindungsgemäße Stabilisatorsystem zusätzlich Komponenten **(C)** enthalten, wobei diese stickstoffhaltige organische Verbindungen oder Calciumhydroxid darstellen.

Hierbei ist bevorzugt, dass die Komponente **(C)** stickstoffhaltige organische Verbindungen **(C)** enthält, die subst. Cyanoacetyl-harnstoffe (**C-1**), subst. 6-Aminouracile **(C-2, C-3, C-4, C-5** und **C-6),** subst. Mono- oder Poly-1,4-Dihydropyridine **(C-7)** und 3-Aminocrotonsäureester **(C-8)** sind und die folgende Strukturen aufweisen: 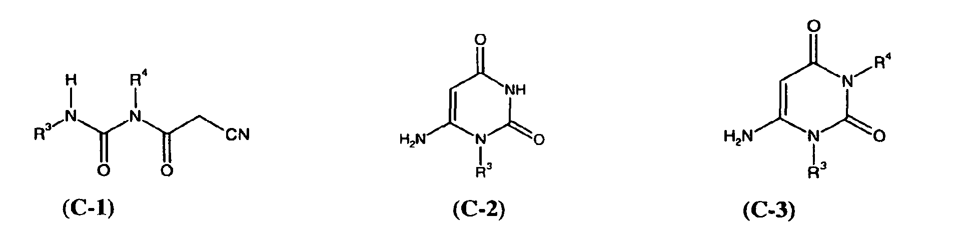 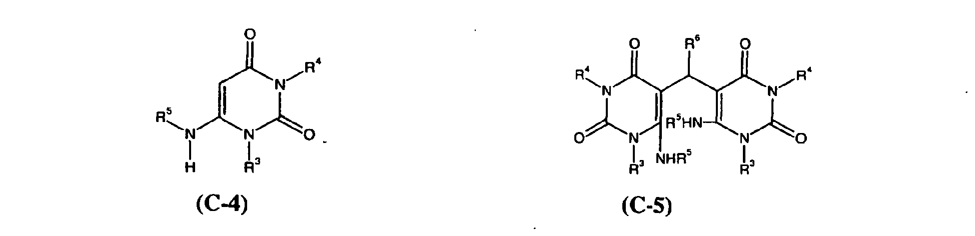 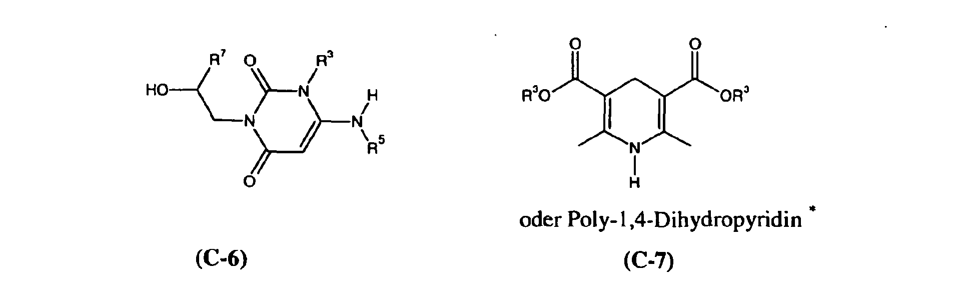 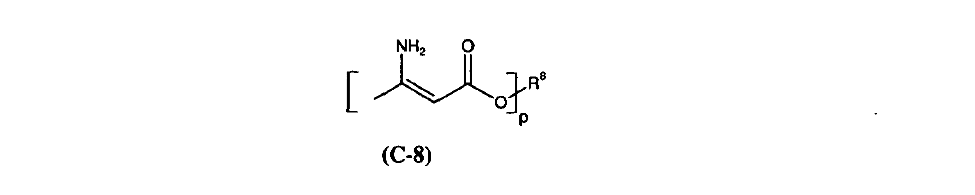 * = Die Struktur der subst. Poly-1,4-Dihydropyridine wird beschrieben in WO2006/0136191.
worin
**R³** = C₁ - C₂₀-Alkyl, C₃ - C₆-Alkenyl, C₇ - C₉-Phenylalkyl, unsubstituiertes oder mit 1 bis 3 C₁ - C₄-Alkyl-, C₁ - C₄-Alkoxy- oder Hydroxygruppen substituiertes Phenyl und
**R⁴** = R³ oder H darstellen.
**R⁵** = H oder Hydroxy-C₂ - C₄-Alkyl, Hydroxyphenyl, C₁ - C₄-Alkoxyphenyl
**R⁶** = C₁ - C₂₀-Alkyl
**R⁷** = H oder die Reste C₁ - C₁₄-Alkyl, C₂ - C₄-Alkenyl, C₄ - C₈-gegebenfalls substituierter Cycloalkyl, C₆ - C₁₀-aryl, C₇ - C₁₀-Alkaryl, C₇ - C₁₀-Aralkyl, -CH₂-O-R⁹, mit
**R⁹** = C₁ - C₁₀-Alkylrest oder C₂ - C₄-Alkenylrest oder C₄ - C₈-Cycloalkyl gegebenfalls einen Oxiranring enthaltend.
**R⁸** = unverzweigtes oder verzweigtes C₂ - C₂₀ -Alkylen, das durch 1 bis 4 O - oder S- Atome unterbrochen oder/und durch 1 bis 4 OH-Gruppen substituiert sein kann, oder Dimethylolcyclohexan-1,4-diyl, Polyethylen( oder -propylen)glykol-α, ω-diyl (vorzugsweise ist Poly = Tetra bis Deka), Polyglyceryl -α,ω-diyl (vorzugsweise ist Poly = Tetra bis Deka) oder Glycerin-triyl, Trimethylolethan(oder -propan)-triyl, Pentaerythrit-tri(oder -tetra)yl, Bistrimethylolethan(oder -propan)-tri(oder -tetra)yl, Diglycerin-tri(oder tetra)yl, Tetrit-tetrayl, Triglycerin-tri(oder -tetra, -penta)yl, Pentit-pentayl, Dipentaerythrit-penta(oder -hexa)yl und Hexit-hexayl; und
**p** = 2-6.

Insbesondere bevorzugt ist, dass der subst. Cyanacetylharnstoff 1,3-Dimethyl-cyanacetylharnstoff, das subst. 6- Aminouracil 1,3-Dimethyl 6-aminouracil, 1,3-Diallyl 6-aminouracil oder ein 5,5'- [C₄-C₁₈-Alkyliden]-bis-1,3-dimethyl-6-aminouracil, das subst. 1,4-Dihydropyridin 2,6-Dimethyl-3,5- bis-carboxylauryl-1,4-dihydropyridin und der 3-Aminocrotonsäureester 1,4-Butandiyl-bis-3-aminocrotonat oder 2,2'-Thio-bis-ethandiyl-3-aminocrotonat ist.

Die Substanzklassen **(C-1)** bis **(C-6)** sind näher beschrieben in EP 0768 336, EP 1 510 545, EP 0 967 209, EP 0 967 208, EP 0 962 491 und EP 1 044 968.

Besonders bevorzugt sind folgende Verbindungen als Komponenten (A) bis (C).
**(A) :** Tetracalcium-monocarbonato-dodecahydroxodialuminat sowie deren Hydrate
**(B) :** Catena-2,2',2"-nitrilotrisethanol-perchlorato-Natrium
**(C)**:
   **(C-1)** 1,3-Dimethyl-cyanacetylharnstoff
   **(C-2)** 1-[C₃ - C₂₂-Alkyl]-oder 1-Benzyl-6-aminouracil
   **(C-3)** Bis-1,3-C₁ - C₂₂-Alkyl- oder 1,3-Dibenzyl-6-aminouracil
   **(C-4)** 6-[2-Hydroxyäthylamino]-, 6-[2(3,4)-Hydroxyanilino]- oder 6-[2(3,4)-Meth(Eth)oxyanilino]-1,3-dimethyluracil
   **(C-5)** 5,5'-[C₄ - C₁₈-Alkyliden]-bis-1,3-dimethyl-6-aminouracil
   **(C-6)** 1-Methyl(Phenyl, Benzyl)-3-[2-Hydroxybutyl]-6-aminouracil oder 1-Methyl(Phenyl, Benzyl)-3-[2-Hydroxy-2-allyloxyethyl]-6-aminouracil
   **(C-7)** 2,6-Dimethyl-3,5-bis-carboxylauryl-1,4-dihydropyridin
   **(C-8)** 1,4-Butandiyl-bis-3-aminocrotonat oder 2,2'-Thio-bis-ethandiyl-3-aminocrotonat.

Unter **(C )** sind ganz besonders bevorzugt:
1,3-Dimethyl-6-aminouracil, 1,3-Dibenzyl-6-aminouracil **(C-3),**
1,3-Dimethyl-6-[2-hydroxyanilino]-uracil **(C-4),**
5,5'-Pentyliden-bis -1,3-dimethyl 6-aminouracil,
5,5'-Hexyliden-bis -1,3-dimethyl 6-aminouracil,
5,5'-Heptyliden-bis 1,3-dimethyl -6-aminouracil,
5,5'-Octyliden-bis 1,3-dimethyl 6-aminouracil,
5,5'-Undecyliden-bis -1,3-dimethyl 6-aminouracil oder
5,5'-Dodecyliden-bis-1,3-dimethyl 6-aminouracil **(C-5),**
1-Methyl-3-[2-Hydroxybutyl]-6-aminouracil oder
1-Benzyl-3-[2-Hydroxybutyl]-6-aminouracil **(C-6),**
2,6-Dimethyl-3,5-bis-carboxylauryl-1,4-Dihydropyridin **(C-7)** und
1,4-Butandiyl-bis-aminocrotonat oder
2,2'-Thiodiethanol-diyl-bis-aminocrotonat **(C-8),**
Calciumhydroxid.

Gegebenenfalls kann das erfindungsgemäße Stabilisatorsystem noch weitere Zusatzstoffe aufweisen, wie:
- Magnesiumhydroxid und Erdalkaliseifen
- Polyole und Zuckeralkohole bzw. Tris-hydroxyalkyl-isocyanurate
- Phosphorigsäureester (Phosphite)
- Glycidylverbindungen und epoxidierte Fettsäureester
- Sterisch gehinderte Amine (HALS) und Aminoalkohole
- β-Diketone und β-Ketoester
- Antioxidantien
- UV-Absorber und Lichtschutzmittel
- Optische Aufheller
- Antistatika
- Biozide
- Pigmente
- Füllstoffe
- Treibmittel
- Gleitmittel
- Weichmacher

Ein weiterer Gegenstand der vorliegenden Erfindung ist daher eine erfindungsgemäße Zusammensetzung, die weiterein eine oder mehrere dieser Verbindungen aufweist.

Bevorzugt enthält das erfindungsgemäße Stabilisatorsystem zusätzlich mindestens ein Antioxidans und/oder einen Alkohol ausgewählt aus Polyolen, Zuckeralkoholen und Tris-hydroxyalkyl-isocyanuraten bzw. Aminoalkoholen.

### Erdalkalihydroxide und -Seifen

Bevorzugt sind Calciumhydroxid und Calciumstearat.

### Polyole und Zuckeralkohole

Als Verbindungen dieses Typs kommen beispielsweise in Betracht: Pentaerythrit, Dipentaerythrit, Tripentaerythrit, Trimethylolethan, Bistrimethylolpropan, Inosit, Polyvinylalkohol, Bistrimethylolethan, Trimethylolpropan, Sorbit, Maltit, Isomaltit, Lycasin, Mannit, Laktose, Leukrose, Tris-(hydroxyethyl)isocyanurat (THEIC), Palatinit, Tetramethylzyklohexanol, Tetramethytolzyklopentanol, Tetramethylolpyranol, Glyzerin, Diglyzerin, Polyglyzerin, Thiodiglyzerin oder 1-O-∝-D-Glycopyranosyl-D-mannit-dihydrat. Bevorzugt sind Disaccharidalkohole. Verwendung finden auch Polyolsirupe wie Sorbit-, Mannit- und Maltitsirup. Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewendet werden. Bevorzugt ist Tris-(hydroxyethyl)isocyanurat.

### Phosphorigsäureester (Phosphite)

Beispiele hierfür sind Trioktyl-, Tridezyl-, Tridodezyl-, Tritridezyl-, Tripentadezyl-, Trioleyl, Tristearyl-, Triphenyl-, Trilauryl-, Trikresyl-, Tris-nonylphenyl-, Tris-2,4-t-butyl-phenyl- oder

Trizyklohexylphosphit. Weitere geeignete Phosphite sind verschieden gemischte Aryldialkyl- bzw. Alkyl-diarylphosphite wie Phenyldioktyl-, Phenyldidezyl-, Phenyldidodezyl-, Phenylditridezyl-, Phenylditetradezyl-, Phenyldipentadezyl-, Oktyldiphenyl-, Dezyldi-phenyl-, Undezyldiphenyl-, Dodezyldiphenyl-, Tridezyldiphenyl-, Tetradezyldiphenyl-, Pentadezyldiphenyl-, Oleyldiphenyl-, Stearyldiphenyl- und Dodezyl-bis-2,4-di-t-butyl-phenylphosphit. Weiterhin können auch Phosphite verschiedener Di- bzw. Polyole vorteilhaft verwandt werden, z.B. Tetraphenyldipropylenglykoldiphosphit, Poly(dipropylenglykol)phenylphosphit, Tetra-isodezyl-dipropylenglykoldiphosphit, Tris-dipropylenglykolphosphit, Tetramethylolzyklohexanol-dezyldiphosphit, Tetramethylolzyklohexanolbutoxyethoxy-ethyldiphosphit, Tetramethylolzyklohexanol-nonylphenyl-diphosphit, Bis-nonylphenyl-di-trimethylolpropandiphosphit, Bis-2-butoxyethyl-di-trimethylolpropandiphosphit, Trishydroxyethylisocyanurat-hexadezyltriphosphit, Didezylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gemische der statistischen Zusammen-setzung (H₁₉C₉-C₆H₄)O_{1,5}P(OC_{12,13}H_{25,27})_{1,5} oder (C₈H₁₇-C₆H₄-O-)₂P(i-C₈H₁₇O),(H₁₉C₉-C₆H₄)O_{1,5}P(OC_{9,11}H_{19,23})_{1,5}. Technische Beispiele sind Naugard P, Mark CH300, Mark CH301, MarkCH302 und MarkCH55 (Hersteller Chemtura Corp. USA). Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewendet werden.

Ein erfindungsgemäßes Stabilisatorsystem kann die beschriebenen Phosphitverbindungen in einer Menge von bis zu etwa 30 Gew.-%, insbesondere bis etwa 10 Gew.-%, enthalten.

### Glycidylverbindungen und epoxidierte Fettsäureester

Beispiele für Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, und epoxidiertes Baumwollsamenöl.

Beispiele für Glycidylverbindungen sind Verbindungen mit der Glycidylgruppe: 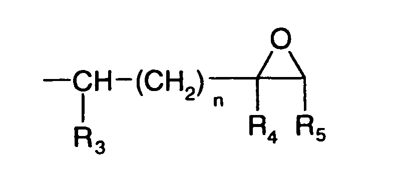 wobei diese direkt an Kohlenstoff, Sauerstoff-, Stickstoff- oder Schwefelatome gebunden ist, und worin entweder R₃ und R₅ beide Wasserstoff sind, R₄ Wasserstoff oder Methyl und n = 0 ist, oder worin R₃ und R₅ zusammen -CH₂-CH₂- oder -CH₂-CH₂-CH₂- bedeuten, R₄ dann Wasserstoff und n = 0 oder 1 ist.

I) Glycidyl- und β-Methylglycidylester erhältlich durch Umsetzung einer Verbindung mit mindestens einer Karboxylgruppe im Molekül und Epichlorhydrin bzw. Glyzerindichlorhydrin bzw. β-Methyl-epichlorhydrin. Die Umsetzung erfolgt zweckmäßig in Gegenwart von Basen.

Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Kapron-, Kapryl-, Pelargonsäure, Laurin-, Myristin-, Palmitin- und Stearinsäure.

Es können aber auch zykloaliphatische Karbonsäuren eingesetzt werden, wie beispielsweise Zyklohexankarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z. B. von Trimellithsäure und Polyolen, wie beispielsweise Glyzerin oder 2,2-Bis-(4-hydroxyzyklohexyl)-propan verwendet werden. Weitere im Rahmen dieser Erfindung verwendbare Epoxidverbindungen finden sich in EP 0 506617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von azyklischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glyzerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooktanol, 2-Ethylhexanol, Isodekanol sowie C₇-C₉-Alkanol- und C₉-C₁₁-Alkanolgemischen.

Sie leiten sich aber auch beispielsweise ab von zykloaliphatischen Alkoholen wie 1,3- oder 1,4-Dihydroxyzyklohexan, Bis-(4-hydroxyzyklohexyl)-methan, 2,2-Bis-(4-hydroxyzyklo-hexyl)-propan oder 1,1-Bis-(hydroxymethyl)-zyklohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N"'-Tetraglycidylderivate von Zykloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-merkaptomethylphenyl)-ether ableiten.

V) Epoxidverbindungen mit einem Rest der obigen Formel, worin R1 und R3 zusammen - CH2-CH2- bedeuten und n 0 ist, sind Bis-(2,3-epoxyzyklopentyl)-ether, 2,3-Epoxyzyklopentylglycidylether oder 1,2-Bis-(2,3-epoxyzyklopentyloxy)-ethan. Ein Epoxidharz mit einem Rest der obigen Formel, worin R1 und R3 zusammen -CH2-CH2- sind und n 1 bedeutet, ist beispielsweise 3,4-Epoxy-6-methyl-zyklohexankarbonsäure-(3',4'-epoxy-6'-methyl-zyklohexyl)-methylester.

Geeignete endständige Epoxide sind beispielsweise:
a) flüssige Bisphenol-A-diglycidylether wie Araldit®GY 240, Araldit®GY 250, Araldit®GY 260, Araldit®GY 266, Araldit®GY 2600, Araldit®MY 790 und Epicote® 828 (BADGE);
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610 und Epikote® 1002;
c) flüssige Bisphenol-F-diglycidylether wie Araldit®GY 281, Araldit®PY 302, Araldit®PY 306 (BFDGE);
d) feste Polyglycidylether von Tetraphenylethan wie CG Epoxy Rein®0163;
e) feste und flüssige Polyglycidylether von Phenolformaldehyd Novolak wie EPN 1138, EPN 1139, GY 1180, PY 307 (NODGE);
f) feste und flüssige Polyglycidylether von o-Kresolformaldehyd Novolak wie ECN 1235, ECN 1273, ECN 1280, ECN 1299 (NODGE);
g) flüssige Glycidylether von Alkoholen wie Shell Glycidylether® 162, Araldit®DY 0390, Araldit®DY 0391;
h) flüssige und feste Glycidylester von Karbonsäuren wie Shell Cardura® E Terephthalsäureester, Trimellithsäureester sowie deren Mischungen Araldit®PY 284 und Araldit® P811;
   i) feste heterozyklische Epoxidharze (Triglycidylisocyanurat) wie Araldit® PT 810;
   j) flüssige zykloaliphatische Epoxidharze wie Araldit®CY 179;
   k) flüssige N,N,O-Triglycidylether von p-Aminophenol wie Araldit®MY 0510;
   l) Tetraglycidyl-4-4'-methylenbenzamin oder N,N,N',N'-Tetraglycidyldiamino-phenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

### Sterisch gehinderte Amine (HALS) und Aminoalkohole

Bei den sterisch gehinderten Aminen handelt es sich allgemein um Verbindungen enthaltend die Gruppe 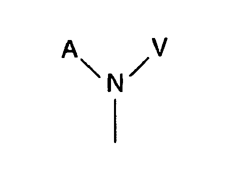 worin A und V unabhängig voneinander C₁-₈-Alkyl-, C₃-₈ Alkenyl-, C₅-₈ -Zykloalkyl-, oder C₇-₉ -Phenylalkyl- sind, oder zusammen gegebenenfalls durch O, NH oder CH₃-N unterbrochenes C₂-₅ -Alkylen bilden, oder um ein zyklisches sterisch gehindertes Amin, insbesondere eine Verbindung aus der Reihe der Alkyl- bzw. Polyalkylpiperidine, vor allem der Tetramethylpiperidine enthaltend die Gruppe

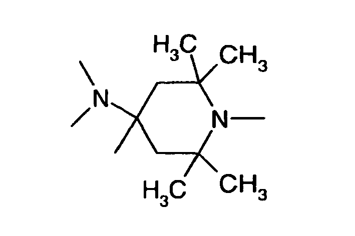

Beispiele für solche Polyalkylpiperidinverbindungen sind folgende (bei den oligomeren oder polymeren Verbindungen liegen n und r im Bereich 2-200, vorzugsweise im Bereich 2-10, insbesondere 3-7). Eine umfangreiche Liste solcher Verbindungen befindet sich in EP 0 796 888 B1.

Im Rahmen einer besonders bevorzugten Ausführungsform der vorliegenden Erfindung werden als Aminoalkohole heterozyklische Verbindungen eingesetzt. Beispiele für diese sind: EO-, PO- und BO-Umsetzungsprodukte von Ethylen- und Propylenharnstoffen, Parabansäure, Hydantoinen, Barbitursäuren, Glykolurilen und Isozyanursäuren. Besonders bevorzugt ist im Rahmen der vorliegenden Erfindung der Einsatz von Tris(hydroxyethyl)isocyanurat (THEIC) oder Tris(hydroxypropyl)isocyanurat als Bestandteil des erfindungsgemäßen Stabilisatorsystems.

Der Gehalt eines erfindungsgemäßen Stabilisatorsystems an THEIC, beträgt beispielsweise etwa 0,01 bis etwa 10 Gew.-%.

### β-Diketone und β-Ketoester

Verwendbare 1,3-Dikarbonylverbindungen sind lineare oder zyklische Dikarbonylverbindungen. Bevorzugt werden Dikarbonylverbindungen der Formel R'₁CO CHR₂'-COR'₃ verwendet, worin R'₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Zykloalkyl, durch C₁-C₄-alkylsubstituiertes C₅-C₁₂-Zykloalkyl oder eine Gruppe -R'₅-S-R'₆ oder -R'₅-O-R'₆ bedeutet; R'₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Gruppe -CO-R'₄ bedeutet; R'₃ eine der für R'₁ gegebenen Bedeutungen hat oder C₁-C₁₈-Alkoxy bedeutet, R'₄ C₁-C₄-Alkyl oder Phenyl bedeutet; R'₅ C₁-C₁₀-Alkylen bedeutet und R'₆ C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone PS - EP 0.346.279 A1 und die Oxa- und Thia-diketone in PS - EP 0.307.358 A1 ebenso wie die auf Isozyanursäure basierenden Ketoester in PS - US 4,339,383.

R'₁ und R'₃ als Alkyl können insbesondere C₁-C₁₈-Alkyl sein, z. B. Methyl, Ethyl, n-Propyl, Isopropyl, n-Butyl, tert Butyl, Pentyl, Hexyl, Heptyl, Oktyl, Dezyl, Dodezyl oder Oktadezyl. R'₁ und R'₃ als Hydroxyalkyl stellen insbesondere eine Gruppe -(CH₂)ₙ-OH dar, worin n 5, 6 oder 7 ist.

R'₁ und R'₂ als Alkenyl können beispielsweise Vinyl, Allyl, Methallyl, 1-Butenyl, 1-Hexenyl oder Oleyl bedeuten, vorzugsweise Allyl.

R'₁ und R'₃ als durch OH, Alkyl, Alkoxy oder Halogen substituiertes Phenyl können beispielsweise Tolyl, Xylyl, tert-Butylphenyl, Methoxyphenyl, Ethoxyphenyl, Hydroxyphenyl, Chlorphenyl oder Dichlorphenyl sein.

R'₁ und R'₃ als Phenylalkyl sind insbesondere Benzyl. R'₂ und R'₃ als Zykloalkyl oder Alkylzykloalkyl sind insbesondere Zyklohexyl oder Methylzyklohexyl.

R'₂ als Alkyl kann insbesondere C₁-C₄-Alkyl sein. R'₂ als C₂-C₁₂-Alkenyl kann insbesondere Allyl sein. R'₂ als Alkylphenyl kann insbesondere Tolyl sein. R'₂ als Phenylalkyl kann insbesondere Benzyl sein. Vorzugsweise ist R'₂ Wasserstoff. R'₃ als Alkoxy kann z.B. Methoxy, Ethoxy, Butoxy, Hexyloxy, Oktyloxy, Dodezyloxy, Tridezyloxy, Tetradezyloxy oder Oktadezyloxy sein. R'₅ als C₁-C₁₀-Alkylen ist insbesondere C₂-C₄-Alkylen. R'₆ als Alkyl ist insbesondere C₄-C₁₂-Alkyl, z. B. Butyl, Hexyl, Oktyl, Dezyl oder Dodezyl.

R'₆ als Alkylphenyl ist insbesondere Tolyl. R'₆ als Phenylalkyl ist insbesondere Benzyl.

Beispiele für 1,3-Dikarbonylverbindungen der vorstehenden allgemeinen Formel sowie deren Alkali-, Erdalkali- und Zinkchelate sind Acetylazeton, Butanoylazeton, Heptanoylazeton, Stearoylazeton, Palmitoylazeton, Lauroylazeton, 7-tert.-Nonylthioheptandion-2,4, Benzoylaceton, Dibenzoylmethan, Lauroylbenzoylmethan, Palmitoylbenzoylmethan, Stearoylbenzoylmethan, Isooktylbenzoylmethan, 5-Hydroxykapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-acetylnonan, Benzoyl-acetylphenylmethan, Stearoyl-4-methoxybenzoylmethan, Bis(4-tert-butylbenzoyl)methan, Benzoylformylmethan, Benzoyl-phenylacetylmethan, Biszyklohexanoyl-methan, Di-pivaloyl-methan, 2-Acetyl-zyklo-pentanon, 2-Benzoylzyklopentanon, Diazetessigsäuremethyl-, -ethyl- und -allylester, Benzoyl-, Propionyl- und Butyrylazetessigsäuremethyl- und -ethylester, Triacetylmethan, Azetessigsäuremethyl-, -ethyl-, - hexyl-, -oktyl-, -dodezyl- oder -oktadezylester, Benzoyl-essigsäuremethyl-, -ethyl-, -butyl-, - 2-ethylhexyl-, -dodezyl- oder -oktadezylester, sowie Propionyl- und Butyrylessigsäure-C₁-C₁₈-alkylester. Stearoylessigsäureethyl-, -propyl-, -butyl-, -hexyl- oder -oktylester sowie mehrkernige β-Ketoester wie in PS - EP-A 0 433 230 beschrieben und Dehydrazetsäure sowie deren Zink-, Magnesium- oder Alkalisalze. Bevorzugt sind Ca-, Mg- und Zn-Salze des Acetylazetons und der Dehydrazetsäure.

Besonders bevorzugt sind 1,3-Diketoverbindungen der obigen Formel, worin R'₁ C₁-C₁₈-Alkyl, Phenyl, durch OH, Methyl oder Methoxy substituiertes Phenyl, C₇-C₁₀-Phenylalkyl oder Zyklohexyl ist, R'₂ Wasserstoff ist und R'₃ eine der für R'₁ gegebenen Bedeutungen hat. Ebenso gehören hierzu heterozyklische 2,4-Dione wie N-Phenyl-3-acetylpyrrolidin-2,4-dion. Weitere Vertreter diese Kategorie sind beschrieben in PS - EP 0.734.414 A1. Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewendet werden.

### Antioxidantien

Dazu zählen sterisch gehinderte Phenole, wie alkylierte Monophenole, z. B. 2,6-Di-tert-butyl-4-methylphenol, Alkylthiomethylphenole, z.B. 2,4-Di-oktylthiomethyl-6-tert-butylphenol, alkylierte Hydrochinone, z. B. 2,6-Di-tert-butyl-4-methoxyphenol, hydroxylierte Thiodiphenylether, z. B. 2,2'-Thio-bis-(6-tert-butyl-4-methylphenol), Alkyliden-Bisphenole, z.B. 2,2'-Methylen-bis-(6-tert-butyl-4-methylphenol), Benzylverbindungen, z.B. 3,5,3',5'-Tetra-tert-butyl-4,4'-di-hydroxydibenzylether, hydroxybenzylierte Malonate, z.B. Dioktadezyl-2,2-bis-(3,5-di-tert-butyl-2-hydroxybenzyl)-malonat, Hydroxybenzyl-Aromaten, z.B. 1,3,5-Tris-(3,5-di-tert-butyl-4-hydroxybenzyl)-2,4,6-trimethylbenzol, Triazinverbindungen, z.B. 2,4-Bis-oktyl-merkapto-6-(3,5-di-tert-butyl-4-hydroxyanilino) 1,3,5-triazin, Phosphonate und Phosphonite, z.B. Dimethyl-2,5-di-tert-butyl-4-hydroxy-benzylphosphonat, Acylaminophenole, z.B. 4-Hydroxylaurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dizyklohexyl-4-hydroxyphenyl)-propionsäure, Ester der 3,5-Di-tert-butyl-4-hydroxy-phenylessigsäure mit ein- oder mehrwertigen Alkoholen, Amide der β-(3,5-di-tert-butyl-4-hydroxyphenyl)-propionsäure, z.B. N,N'-Bis-(3,5-di-tert-butyl-4-hydroxyphenylpropionyl)-hexamethylendiamin, Vitamin E (Tocopherol) und Abkömmlinge sowie D,L-Ascorbinsäure. Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewendet werden.

### UV-Absorber und Lichtschutzmittel

Beispiele dafür sind 2-(2'-Hydroxyphenyl)-benztriazole, z.B. 2-(2'-Hydroxy-5'-methylphenyl)-benztriazol, 2-Hydroxybenzophenone, Ester von gegebenenfalls substituierten Benzoesäuren, z.B. 4-tert-Butyl-phenylsalizylat, Phenylsalizylat, Acrylate, Nickelverbindungen, Oxalsäurediamide, z.B. 4,4'-Di-oktyloxy-oxanilid, 2,2'-Di-oktyloxy-5,5'-di-tert-butyl-oxanilid, 2-(2-Hydroxyphenyl)-1,3,5-triazine, z.B. 2,4,6-Tris(2-hydroxy-4-oktyloxyphenyl)-1,3,5-triazin, 2-(2-Hydroxy-4-oktyloxyphenyl)-4,6-bis-(2,4-dimethylphenyl)-1,3,5-triazin, sterisch gehinderte Amine auf Basis von Tetramethylpiperidin bzw. Tetramethylpiperazinon oder Tetramethylmorpholinon, z.B. Bis(2,2,6,6-tetramethylpiperidin-4-yl)-sebazat, Bis(2,2,6,6-tetramethyl-piperidin-4-yl)-succinat sowie Benzoxazinone wie 1,4-Bis-benzoxazinonyl-benzol.

### Optische Aufheller

Beispiele hierfür sind Bis-benzol(1,4)-oxazole, Phenylkumarine und Bis-styryl-biphenyle wie 4-Methyl-7-diethylaminokumarin, 3-Phenyl-7-(4-methyl-6-butoxybenzoxazol)-kumarin, 4,4'-Bis-(benzoxazol-2-yl)-stilben und 1,4-Bis(-benzoxazol-2-yl)-naphthalin. Bevorzugt sind Lösungen optischer Aufheller in einem Weichmacher, beispielsweise DOP.

### Antistatika

Antistatika werden eingeteilt in nichtionische (a), anionische (b), kationische (c) und amphotere (d) Klassen. Zu (a) gehören Fettsäureethoxylate, Fettsäureester, ethoxylierte Fettalkylamine, Fettsäurediethanolamide und ethoxylierte Phenole und Alkohole sowie Polyglykolmonofettsäureester. Zu (b) gehören Alkalifettalkansulfonate und Phosphorsäurebis-fettalkoholester-alkalisalze. Zu (c) gehören quaternäre Fettalkylammoniumsalze und zu (d) gehören Fettalkylbetaine und Fettalkyl-imidazolinbetaine. Einzelne bevorzugte Verbindungen sind Laurinsäurediethanolamid, Myristyldiethanolamin, Na-oktadezyl-sulfonat und Na-bis-oktadezylphosphat.

### Biozide

Als Biozide sind zu benennen: Isothiazolin-3-on-Derivate, wie, 2-n-Octyl-4-isothiazolin-3-on (OIT) und 4,5-Dichloro-2-n-octyl-4-isothiazolin-3-on (DCOIT), Ag-Zn-Zeolith, N-Trichloromethylthio-4-cyclohexen-1,2-dicarboximid, 2,3,5,6-Tetrachloro-4-(methyl sulphonyl)pyridin, 10,10'-Oxybisphenoxarsine (OBPA), quaternäre Ammonium- und Phosphoniumsalze, 3-Iodo-2-propinyl-butylcarbamat(IPBC), Benzimidazol -2-carbaminsäuremethylester, 2,4,4'-Trichloro-2'-hydroxydiphenylether, Zink-bis-2-pyridinthiolat-N-oxid (Zinkpyrithion) und 1,2-Benzisothiazolin-3-on, N-Butyl-benzisothiazolin-3-on sowie 2-(4-Thiazolyl)-benzimidazol (Thiabendazol).

### Pigmente

Ebenfalls als Bestandteil des erfindungsgemäßen Stabilisatorsystems geeignet sind Pigmente. Geeignete Stoffe sind dem Fachmann bekannt. Beispiele für anorganische Pigmente sind TiO₂ Pigmente auf Zirkonoxidbasis, BaSO₄, Zinkoxid (Zinkweiss) und Lithopone (Zinksulfid/Bariumsulfat), Ruß, Ruß-Titandioxid-Mischungen, Eisenoxidpigmente, Sb₂O₃, (Ti,Ba,Sb)O₂, Cr₂O₃, Spinelle wie Kobaltblau und Kobaltgrün, Cd(S,Se), Ultramarinblau. Organische Pigmente sind z.B. Azopigmente, Phthalozyaninpigmente, Chinacridonpigmente, Perylenpigmente, Diketo-pyrrolopyrrolpigmente und Anthrachinon-pigmente. Bevorzugt ist TiO₂ auch in mikronisierter Form. Eine Definition und weitere Beschreibungen finden sich im "Handbook of PVC Formulating", E. J.Wickson, John Wiley & Sons, New York, 1993.

### Füllstoffe

Als Füllstoffe sind zu benennen: Calciumcarbonat, Dolomit, Calciumsulfat, Talk, Kaolin, Glimmer, Feldspat, Nephelin, Syenit, Wollastonit, Bariumsulfat, Schwerspat, Aluminiumhydroxid, Magnesiumhydroxid, Ruß und Graphit.

### Treibmittel

Treibmittel sind z.B. organische Azo- und Hydrazoverbindungen, Tetrazole, Oxazine, Isatinsäureanhydrid, N-Methylisatinsäureanhydrid, sowie Soda und Natriumbikarbonat. Bevorzugt sind Azodikarbonamid und Natriumbikarbonat sowie deren Mischungen. Ganz besonders bevorzugt ist Isatinsäureanhydrid oder N-Methylisatinsäureanhydrid speziell in Weich-PVC oder PVC-Halbhart.

### Gleitmittel

Ein erfindungsgemäßes Stabilisatorsystem kann weiterhin Gleitmittel enthalten.

Als Gleitmittel kommen beispielsweise in Betracht: Montanwachse, Fettsäureester, PE- und PP-Wachse, Amidwachse, Chlorparaffine, Glyzerinester oder Erdalkaliseifen, ferner Fettketone sowie Kombinationen davon, wie in PS - EP 0.259.783 A1 aufgeführt.

Ein erfindungsgemäßes Stabilisatorsystem kann die beschriebenen Gleitmittel in einer Menge von bis zu etwa 70 Gew.-%, insbesondere bis etwa 40 Gew.-%, enthalten.

### Weichmacher

Ebenfalls als Zusatzstoffe für das Stabilisatorsystem gemäß der vorliegenden Erfindung geeignet sind organische Weichmacher. Als organische Weichmacher kommen beispielsweise solche aus den folgenden Gruppen in Betracht:
(i) Phthalsäureester wie bevorzugt Di-2-ethylhexyl-, Di-iso-nonyl- und Di-iso-dezylphthalat, die auch unter den gebräuchlichen Abkürzungen DOP (Dioktylphthalat, Di-2-ethylhexyl-phthalat), DINP (Diisononylphthalat), DIDP (Diisodezylphthalat) bekannt sind
(ii) Ester aliphatischer Dikarbonsäuren, insbesondere Ester von Adipin-, Azelain- und Sebazinsäure, bevorzugt Di-2-ethylhexyladipat und Di-iso-oktyladipat
(iii) Trimellitsäureester, beispielsweise Tri-2-ethylhexyltrimellitat, Tri-iso-dezyltri-mellitat (Gemisch), Tri-iso-tridezyltrimellitat, Tri-iso-oktyltrimellitat (Gemisch) sowie Tri-C₆-C₈-alkyl, Tri-C₆-C₁₀-alkyl-, Tri-C₇-C₉-alkyl- und Tri-C₉-C₁₁-alkyl-trimellitate; gebräuchliche Abkürzungen sind TOTM (Trioktyltrimellitat, Tri-2-ethylhexyl-trimellitat), TIDTM (Triisodezyltrimellitat) und TITDTM (Triisotridezyltrimellitat)
(iv) Epoxyweichmacher; in der Hauptsache sind das epoxidierte ungesättigte Fettsäuren z.B. epoxidiertes Sojabohnenöl
(v) Polymerweichmacher: Die gebräuchlichsten Ausgangsmaterialien für ihre Herstellung sind Dikarbonsäuren wie Adipin-, Phthal-, Azelain- und Sebazinsäure; Diole wie 1,2-Propandiol, 1,3-Butandiol, 1,4-Butandiol, 1,6-Hexandiol, Neopentylglykol und Diethylenglykol, (s. ADMEX^{®}-Typen der Velsicol Corp. und PX-811 der Asahi Denka)
(vi) Phosphorsäureester: Eine Definition dieser Ester ist im weiter vorn genannten "TASCHENBUCH der Kunststoffadditive " Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Resorzin-bis-diphenylphosphat, Triphenylphosphat, Trikresylphosphat und Trixylenylphosphat; bevorzugt sind Tri-2-ethylhexyl-phosphat sowie Reofos^{®} 50 und 95

### (Ciba Spezialitätenchemie)

(vii) Chlorierte Kohlenwasserstoffe (Paraffine)
(viii) Kohlenwasserstoffe
(ix) Monoester, z.B. Butyloleat, Phenoxyethyloleat, Tetrahydrofurfuryloleat und Alkylsulfonsäureester
(x) Glykolester, z.B. Diglykolbenzoate
(xi) Zitronensäureester, z.B. Tributylzitrat und Acetyltributylzitrat wie in PS - WO 02/05206 beschrieben
(xii) Perhydrophthal-, -isophthal- und -terephthalester sowie Perhydroglykol- und diglykolbenzoatester; bevorzugt ist Perhydro-diisononylphthalat (Hexamoll^{®} DINCH - Hersteller BASF) wie in PS - DE 197.56.913 A1, DE 199.27.977 A1, DE 199.27.978 A1 und DE 199.27.979 A1 beschrieben.
(xiii) Rizinussöl basierte Weichmacher (Soft-N-Safe^{®}, Hersteller Fa. DANISCO)
(xiv) Terpolymere Keton-Ethylen-Ester Elvaloy^{®} KEE, (Elvaloy^{®} 741, Elvaloy^{®} 742, Hersteller Fa. DuPont)

Eine Definition dieser Weichmacher und Beispiele für solche sind in " TASCHENBUCH der Kunststoffadditive ", R. Gächter/H. Müller, Carl Hanser Verlag, 3. Aufl., 1989, Kapitel 5.9.6, Seiten 412-415, sowie in "PVC Technology ", W.V. Titow, 4th. Ed., Elsevier Publ., 1984, Seiten 165-170 angegeben. Es können auch Mischungen unterschiedlicher Weichmacher verwandt werden. Die Weichmacher können in einer Menge von beispielsweise von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorsysteme etwa 0,1 Gew.-% oder mehr, beispielsweise etwa 0,5 Gew.-%, 1 Gew.-%, 2 Gew.-% oder 5 Gew.-%.

Definitionen und Beispiele für weitere Zusätze wie Schlagzähmodifikatoren und Verarbeitungshilfen, Geliermittel, Biozide, Metalldesaktivatoren, Flammschutzmittel, Antifogging-Agents sowie Kompatibilisatoren sind beschrieben in "Handbuch der Kunststoffadditive", R. Gächter/H. Müller, Carl Hanser Verlag, 3. Aufl., 1989, sowie 4. Aufl. 2001 und im "Handbook of Polyvinyl Chloride Formulating" E. J. Wickson, J. Wiley & Sons, 1993, sowie in "Plastics Additives" G. Pritchard, Chapman & Hall, London, Ist Ed., 1998. Schlagzähmodifikatoren sind ferner ausführlich beschrieben in "Impact Modifiers for PVC", J. T. Lutz/D. L. Dunkelberger, John Wiley & Sons, 1992.

Ein weiterer Gegenstand der Erfindung sind Zusammensetzungen, die ein chlorhaltiges Polymer und ein erfindungsgemäßes Stabilisatorsystem enthalten.

Bei diesen Zusammensetzungen sind die Komponenten **(A)** + **(B)** zur Erzielung der Stabilisierung im chlorhaltigen Polymer zweckmäßig in folgenden Konzentrationsbereichen einzusetzen:

| | |
|---|---|
| Bevorzugt: | **(A)** 0,01 bis 30 Gew.-Teile |
| | **(B)** 0,001 bis 10 Gew.-Teile |
| Besonders bevorzugt: | **(A)** 0,05 bis 15 Gew.-Teile |
| | **(B)** 0,01 bis 5,0 Gew.-Teile |
| Ganz besonders bevorzugt: | **(A)** 0,1 bis 10 Gew.-Teile |
| | **(B)** 0,01 bis 3,0 Gew.-Teile |

bezogen auf 100 Gew.-Teile halogenhaltiges Polymer, zu verwenden.

Darüber hinaus ist bevorzugt, dass die Verbindungen der Formel **(A)** in einer Einsatzmenge von 0,01 bis 3,0phr, bevorzugt von 0,05 bis 1,5phr und besonders bevorzugt von 0,1 bis 1,0phr vorliegen.

Die wahlweise enthaltende Komponente **(C)** kann in folgenden Konzentrationsbereichen verwendet werden:

| | |
|---|---|
| Bevorzugt: | 0,01 bis 10 Gew.-Teile |
| Besonders bevorzugt: | 0,01 bis 5,0 Gew.-Teile |
| Ganz besonders bevorzugt: | 0,01 bis 2,0 Gew.-Teile |

bezogen auf 100 Gew.-Teile halogenhaltiges Polymer.

Weiterhin ist bevorzugt, dass Komponente **(C)** in einer Einsatzmange von 0,10 bis 10phr, bevorzugt von 0,01 bis 5,0phr und besonders bevorzugt von 0,01 bis 2,0phr vorliegt.

Darüber hinaus kann die erfindungsgemäße Zusammensetzung selbstverständlich weitere Verbindungen, welche oben als Bestandteile des erfindungsgemäßen Stabilisatorsystems genannt sind, enthalten.

Ein weiterer Gegenstand der vorliegenden Anmeldung ist daher eine Zusammensetzung, die weiterhin mindestens eine der Verbindungen Magnesiumhydroxid und Erdalkaliseifen, Polyole oder Zuckeralkohole bzw. Tris-hydroxyethylisocyanurat (THEIC), Phosphorigsäureester, Glycidyl-Verbindungen, epoxidierte Fettsäureester, ster. gehinderte Amine (HALS), Antioxidantien, UV-Absorber und Lichtschutzmittel, optische Aufheller, Antistatika, Biozide, Pigmente, Füllstoffe, Treibmittel, Gleitmittel, Weichmacher, Schlagzähmodifikatoren und Verarbeitungshilfen aufweist.

Beispiele für die zu stabilisierenden halogenhaltigen Polymere sind chlorhaltigen Polymere sind Polymere, insbesondere die des Vinylchlorids, was ganz besonders bevorzugt ist, sowie Vinylidenchlorids, Vinylharze enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymere Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate des Vinylchlorids mit polymerisierbaren Verbindungen wie Acrylnitril, Vinylacetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA Ethylen-Vinylacetat. Es kommen insbesondere auch Styrol-Acrylnitril-Copolymerisate auf Acrylat-Basis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. Ein weiterer Einsatz der erfindungsgemäßen Stabilisatorkombinationen beruht darin, daß dem Fertigartikel aus Hart-oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart.

Ein weiterer Gegenstand der Erfindung sind Gegenstände wie Gebrauchsmittel (Gebrauchsgegenstände), die eine erfindungsgemäße Zusammensetzung enthalten.

Bevorzugt ist auch die Verwendung von Gebrauchsartikeln, die sich durch eine besondere feine Schaumstruktur auszeichnen. Dies gilt für Hart-, Weich- und Halbhart-PVC. Besonderes wichtig ist dieser Aspekt bei Tapeten und Fußböden aus Weich-PVC. Normalerweise sind Schwermetallverbindungen wie Zn- oder Sn-Stabilisatoren als Kicker zur Erzielung eines feinen Schaumes erforderlich. Überraschend wurde gefunden, daß TEAP-Innerkomplexe eine Kickerwirkung auf Isatinsäure- oder N-Methylisatinsäureanhydrid ausüben, was die Erzielung einer Feinschaumstruktur gewährleistet.

Überraschend ist auch, dass die elektrischen Widerstandseigenschaften eines Gebrauchsartikels, der als eine Komponente TEA-Innerkomplexe der Formel **(B)** enthält, drastisch verbessert werden, was sich insbesondere bei der Kabel- und Isolatorenherstellung und bei Anwendungen im Halbleiterbereich als günstig erweist.

Ferner schneiden diese Artikel (hauptsächlich Kabel) bei der Wasserlagerung besser ab, da die Formulierungen keine Zinkseifen enthalten und somit bei der Verarbeitung kein Zinkchlorid entsteht, das nach Migration an die Kunststoffoberfläche die elektrischen Werte verschlechtert.

Außerdem können bei zinksensitiven Anwendungen hauptsächlich im Bereich Weich-PVC (z.B. Folien, Dachbahnen), die dringend einer bioziden Ausrüstung bedürfen, zinkhaltige Fungizide zugesetzt werden, was die Anwendung von Calcium-Zink-Stabilisatoren stark einschränkt.

Die mitverwendbaren Verbindungen sowie die chlorhaltigen Polymeren sind dem Fachmann allgemein bekannt und werden detailliert beschrieben in "HANDBUCH DER KUNSTOFFADDITIVE", R. Gächter/H. Müller, Carl Hanser Verlag, 3. Aufl., 1989 und 4. Aufl. 2001, in DE 197.41.778 A1 und EP 0.967.245 A1 auf welche hiermit ausdrücklich Bezug genommen wird.

Die erfindungsgemäße Stabilisierung eignet sich sowohl für chlorhaltige Polymerzusammensetzungen, die nicht weichgemachte bzw. weichmacherfreie oder im Wesentlichen weichmacherfreie Zusammensetzungen darstellen, als auch für weichgemachte Zusammensetzungen. Besonderes bevorzugt sind Anwendungen in Hart-PVC bzw. PVC-Halbhart.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien, Blisterpackungen (auch hergestellt nach dem Luvithermverfahren), Profile, Sidings, Fittings, Bürofolien, Margarinebecher, Pralinenverpackungen und Apparategehäuse, Isolatoren, Computergehäuse und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile (Blasformen,), Bürofolien und Folien für Traglufthallen geeignet. Beispiele für die Anwendung der erfindungsgemäßen Zusammensetzungen als Plastisole sind Spielwaren (Rotationsformen), Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe " KUNSTSTOFFHANDBUCH PVC", Band 2/2, W. Becker/H. Braun, 2. Aufl. 1985, Carl Hanser Verlag, S. 1236-1277.

Ein weiterer Gegenstand der vorliegenden Erfindung ist die Verwendung eines erfindungsgemäßen Stabilisatorsystems zur Stabilisierung eines halogenhaltigen Polymers sowie die Verwendung einer erfindungsgemäßen Zusammensetzung zur Herstellung eines erfindungsgemäßen Gegenstandes.

### Beispiele

### I. Herstellung der Walzfelle:

Die in den Tabellen 1.2 (A-2, B-2), 2.1 (C-2, D-2), 3.1 (E-2, F-2) und 4.1 (G-2, H-2, J-2, K-2), 5.1 (L-2, M-2) und 6.1 (N-2, O-2, P-2, R-2) zubereiteten Mischungen werden auf einem Collin-Labormeßwalzwerk (Modell: W100E, BJ: 2005, Fa. COLLIN) jeweils 5 Minuten (Walzendurchmesser: 110 mm, 10 UpM, Friktion: -10 % ) bei der angegebenen Temperatur plastifiziert. Die so erhaltenen Folien (Dicke 0,3mm) werden weiteren Messungen zugeführt.

### II. Durchführung der Dehydrochlorierungsmessungen (DHC):

Die DHC ist ein Maß für die HCl-Abspaltung von PVC, die bei thermischer Belastung stattfindet. Die abgespaltene Salzsäure wird mit Stickstoffgas in eine Vorlage mit dest. Wasser gespült und dort der Anstieg der Leitfähigkeit in Mikrosiemens pro Zentimeter (µS/cm) gemessen. Als Kennzahlen dienen die zugehörigen Minutenwerte [Min], die tabellarisch zusammengefasst werden. Je länger das Zeitintervall zur Erreichung einer bestimmten Leitfähigkeit, desto thermostabiler ist die PVC-Probe.
Gerätetyp: PVC Thermomat 763 (Fa. Metrohm)

Die Messungen erfolgen nach DN 53381 Teil 1, Verfahren B: Leitfähigkeitsmessung.

| | | |
|---|---|---|
| Parameter: | Probeneinwaage: | 500 ± 0,5mg (Walzfellschnitzel) |
| | Temperatur: | °C (wie in den Beispielen angegeben) |
| | Flow: | 7 l/h (Stickstoff 5.0) |
| | Absorptionsvol.: | 60ml (VE-Wasser) |
| | Auswertung: | t₁₀, t₅₀ und t₂₀₀ (Leitfähigkeit von 10, 50 und 200 µS/cm - Angabe in Minutenwerten) |

### III. Durchführung des statischen Hitzetestes (SHT):

Von den nach I hergestellten Walzfellen werden Teststreifen (15mm x 15mm) ausgeschnitten. Diese werden in einem Heraeus-Hordenofen bei der angegebenen Temperatur bis zur signifikanten Verfärbung belastet. Im Anschluß wird der YI-Wert (Yellowness-Index) nach DIN 53381 mit einem Spectro-Guide Farbmessgerät (Fa. BYK-GARDNER) bestimmt und mit dem YI-Wert des unbelasteten Walzfelles verglichen (Nullminutenwert). Die Ergebnisse werden tabellarisch zusammengefasst. Je kleine YI-Wert bei einem angegebenen Zeitpunkt, desto besser ist das Farbverhalten.

### IV. Durchführung des Dauerwalztestes (DWT):

Der dynamische Hitzetest (DWT) wird an einem COLLIN-Walzwerk W110E durchgeführt (Walzendurchmesser: 110 mm, 10 UpM, Friktion: -10 %).

Die Mischungen werden auf dem Walzwerk bei der angegebenen Temperatur 5 Minuten homogenisiert. Anschließend wird bei dieser Temperatur weitergewalzt und Prüfkörper (d = 0,3mm, 25x38mm) in 5-Minuten-Intervallen entnommen und deren Vergilbung (YI-Wert) mit einem Farbmessgerät der Fa. BYK GARDNER (Spectro Guide Sphere Gloss) nach ASTM D 1925 bestimmt.

### Beispiel 1 (Weich-PVC, pigmentierte Folien):

Die Mischungen A-1 und B-1 werden auf einem Universalmixer GT (Fa. ROTH, Karlsruhe) homogenisiert (Tab. 1.1).

**Tab. 1.1: Stabilisatormischungen**

| Substanzen | A-1 | B-1 | Bemerkung |
|---|---|---|---|
| DMAU | 18,18g | 18,18g | Aminouracil ¹⁾ |
| TEAP | 9,09g | 9,09g | TEA.NaP ²⁾ |
| SCAV.-A | 72,72g | -- | CAHC ³⁾ |
| SCAV.-B | -- | 72,72g | SORBACID 911 ⁴⁾ |

| | | | |
|---|---|---|---|
| ¹⁾ 1,3-Dimethyl-6-aminouracil (ex ALDRICH) ²⁾ Catena-µ- 2,2',2"-nitrilotrisethanol-perchlorato-Natrium ³⁾ Ex NABALTEC AG ⁴⁾ Ex SÜD-CHEMIE AG (entspr. Alcamizer 1) | | | |

Mischung A-1 ist erfindungsgemäß. Mischung B-1 entspricht dem Stand der Technik (SdT). Von o.g. Mischungen werden je 2,2g für folgende Rezepturen verwendet (Tab. 1.2).

**Tab.1.2 : Formulierungen**

| Komponenten | A-2 | B-2 |
|---|---|---|
| PVC (Vinnolit S 4170) K-Wert = 70 | 100 | 100 |
| Weichmacher ⁵⁾ (Palatinol N) | 50 | 50 |
| Kreide (Omya 95T) | 3 | 3 |
| Titandioxid (Kronos 2220) | 3 | 3 |
| Stabilisatormischung (A-1) | 2,2 | -- |
| Stabilisatormischung (B-1) | -- | 2,2 |

| | | |
|---|---|---|
| ⁵⁾ DINP (ex BASF) | | |

Von den nach Formulierungen A-2 und B-2 hergestellten Walzfellschnitzel werden die in Tab. 1.3 angegebenen Werte gemessen.

**Tab. 1.3: DHC-Werte (190 °C) nach II, Walzfelle: 180 °C nach I**

| Leitfähigkeit | A-2 | B-2 |
|---|---|---|
| [µS/cm] | [Min] | [Min] |
| 10 | 122 | 98 |
| 50 | 150 | 103 |
| 200 | 202 | 111 |

Es gilt, je größer die Minutenwerte, desto besser die Wirkung.

Die nach Formulierung A-2 und B-2 hergestellten Teststreifen werden im Stat.-HT vermessen (Tab. 1.4).

**Tab. 1.4: SHT (180 °C) nach III**

| Zeit [Min.] | A-2 [ YI] | B-2 [YI] |
|---|---|---|
| 0 | 8,8 | 12,2 |
| 10 | 10,3 | 18,7 |
| 20 | 10,9 | 20,6 |
| 30 | 11,8 | 23,0 |
| 40 | 12,4 | 25,0 |
| 50 | 14,1 | 26,8 |
| 60 | 15,0 | 28,3 |
| 70 | 15,7 | 29,4 |
| 80 | 17,5 | 30,8 |
| 90 | 19,1 | 31,3 |
| 100 | 20,2 | 33,5 |
| 110 | 23,1 | 34,5 |
| 120 | 25,0 | 36,6 |

Es gilt, je kleiner der YI- und je größer der Minutenwert, desto besser die Performance.

Aus der Dehydrochlorierung und dem Statischen Hitzetest ergibt sich bei gewichtsgleichem Einsatz der Stabilisatormischungen eindeutig eine signifikante Verbesserung, sowohl im Hinblick auf Thermostabilität (10, 50 und 200 µS/cm-Werte) als auch in Bezug auf Anfangsfarbe - AF (0 bis 20Min) und Farbhaltung - FH (40 bis 80 Min) und Langzeitstabilität - LZ (100 bis 120 Min) für A-2 (CAHC-haltig) i.Vgl. zum Stand der Technik(SdT) für B-2 (hydrotalzithaltig).

### Beispiel 2 (Weich-PVC, technische Folien):

Es wurden folgende Trockenpulvermischungen hergestellt (Tab. 2.1).

**Tab. 2.1: Formulierungen**

| Komponenten | C-2 | D-2 |
|---|---|---|
| PVC (Vinnolit S 4170) K-Wert = 70 | 100 | 100 |
| Weichmacher ⁶⁾ (DOP) | 50 | 50 |
| Kreide ⁷⁾ (Polcarb 50SV) | 20 | 20 |
| Epoxid.-Sojaöl (ESBO) ⁸⁾ (Lankroflex E2414) | 2,0 | 2,0 |
| Titandioxid (Kronos 2220) | 2,0 | 2,0 |
| Antioxidans (BPA) ⁹⁾ | 0,18 | 0,18 |
| Calciumstearat | 0,2 | 0,2 |
| DMAU ¹⁾ | 0,4 | 0,4 |
| TEAP ²⁾ | 0,16 | 0,16 |
| CAHC ³⁾ | 1,6 | -- |
| Sorbacid 911 ⁴⁾ | -- | 1,6 |

| | | |
|---|---|---|
| ⁷⁾Ex IMERYS ⁸⁾Ex AKCROS ⁹⁾Bisphenol-A: ex ALDRICH | | |

Formulierung C-2 ist erfindungsgemäß. Formulierung D-2 entspricht dem SdT. An den hergestellten Formulierungen C-2 und D-2 werden die nachfolgenden DHC-Werte gemessen (Tab. 2.2).

**Tab. 2.2: DHC-Werte (200 °C) nach II, Walzfelle: 180 °C nach I**

| Leitfähigkeit | C-2 | D-2 |
|---|---|---|
| [µS/cm] | [Min] | [Min] |
| 10 | 92 | 75 |
| 50 | 141 | 94 |
| 200 | 267 | 170 |

Wie aus der Dehydrochlorierung ersichtlich, zeigt bei gewichtsgleichem Einsatz der Stabilisator-Komponenten die CAHC-haltige Rezeptur (C-2) eindeutig eine bessere Performance als die hydrotalzithaltige (D-2).

Die nach Formulierungen C-2 und D-2 hergestellten Teststreifen werden im Hinblick auf Farbverhalten geprüft (Tab. 2.3).

**Tab. 2.3: SHT (200 °C) nach III**

| Zeit [Min.] | C-2 [ YI] | D-2 [YI] |
|---|---|---|
| 0 | 4,0 | 6,1 |
| 5 | 5,5 | 9,6 |
| 10 | 7,9 | 13,7 |
| 15 | 10,6 | 16,4 |
| 20 | 13,2 | 18,6 |
| 25 | 16,2 | 22,9 |
| 30 | 19,5 | 25,5 |
| 35 | 23,1 | 32,1 |
| 40 | 27,7 | 38,2 |
| 45 | 37,6 | 50,5 |
| 50 | 42,2 | 51,8 |
| 55 | 47,9 | dunkelbraun |

Wie Tab. 2.3 zu entnehmen, zeigen die DHC-Werte der CAHC-haltigen Formulierung C-2 im statischen Hitzetest einen besseren Farbverlauf als die der hydrotalzithaltigen D-2.

### Beispiel 3 (Hart-PVC, transparente Folien):

Es wurden folgende Compounds E-2 und F-2 zubereitet (Tab. 3.1).

**Tab. 3.1 Formulierungen**

| Komponenten | E-2 | F-2 |
|---|---|---|
| PVC (Vinnolit S 3160) | 100 | 100 |
| K-Wert = 60 | | |
| Gleitmittel ¹⁰⁾ (Licolub WE 4 P) | 0,2 | 0,2 |
| Epoxid.-Sojabohnenöl (ESBO)⁸⁾ ( Lankroflex E2414) | 3,8 | 3,8 |
| Calciumstearat ¹¹⁾ | 0,25 | 0,25 |
| DMAU ¹⁾ | 0,4 | 0,4 |
| TEAP ²⁾ | 0,2 | 0,2 |
| CAHC ³⁾ | 1,6 | -- |
| Sorbacid 911 ⁴⁾ | -- | 1,6 |

| | | |
|---|---|---|
| ¹⁰⁾ Ex CLARIANT ¹¹⁾ Ex PETER-GREVEN Fettchemie | | |

Formulierung E-2 ist erfindungsgemäß. Formulierung F-2 entspricht dem Stand der Technik. Die Formulierungen E-2 und F-2 lassen sich durch nachfolgende DHC-Werte charakterisieren (Tab. 3.2).

**Tab. 3.2 : DHC-Werte ( 180 °C) nach II, Walzfelle: 180 °C nach I**

| Leitfähigkeit | E-2 | F-2 |
|---|---|---|
| [µS/cm] | [Min] | [Min] |
| 10 | 245 | 210 |
| 50 | 293 | 217 |
| 200 | 407 | 233 |

Die Daten der Dehydrochlorierung zeigen eindeutig, dass bei gewichtsgleichem Einsatz der Stabilisatorkomponenten die CAHC-haltige Rezeptur E-2 i. Vgl. zur hydrotalzithaltigen Rezeptur F-2 eine sehr viel bessere Performance aufweist.

Die nach Formulierung E-2 und F-2 hergestellten Teststreifen weden im SHT geprüft (Tab. 3.3).

**Tab. 3.3: SHT (190 °C) nach III**

| Zeit [Min.] | E-2 [ YI] | F-2 [YI] |
|---|---|---|
| 0 | 7,7 | 8,8 |
| 10 | 13,1 | 11,2 |
| 20 | 17,8 | 23,6 |
| 30 | 24,1 | 31,6 |
| 40 | 36,8 | 42,9 |
| 50 | 43,4 | 48,7 |
| 60 | 49,1 | 58,5 |
| 70 | 55,2 | 66,5 |
| 80 | 63,9 | 76,9 |
| 90 | 81,7 | 90,5 |
| 100 | 88,7 | 114,8 |
| 110 | 99,7 | 134,6 |
| 120 | 100,3 | 140,6 |

Der statische Hitzetest zeigt ebenfalls überzeugend die Überlegenheit von E-2 gegenüber F-2.

### Beispiel 4 (Hart-PVC, Profilrezeptur):

Es wurden folgende Trockenpulvermischungen zubereitet (Tab. 4.1).

**Tab. 4.1 Formulierungen**

| Komponenten | G-2 | H-2 | J-2 | K-2 |
|---|---|---|---|---|
| PVC (Vinnolit S3268) K-Wert = 68 | 94 | 94 | 94 | 94 |
| PVC ¹²⁾ (Vinnolit K 707) | 12 | 12 | 12 | 12 |
| Kreide (Omya 95T) | 6 | 6 | 6 | 6 |
| Titandioxid (Kronos 2220) | 4 | 4 | 4 | 4 |
| Gleitmittel ¹³⁾ (LOXIOL G60) | 0,5 | OnePack I | OnePack II | OnePack II |
| Gleitmittel ¹³⁾ (LOXIOL G22) | 0,1 | | | |
| DMAU ¹⁾ | 0,4 | | | |
| TEAP ²⁾ | 0,16 | | | |
| CAHC ³⁾ | 1,6 | | | |
| Antioxidans ¹⁴) (Irganox 1076) | 0,15 | | | |
| Σ | 2,91 | 3,6 | 3,6 | 3,6 |
| Dipentaerythrit ¹⁵⁾ | 0,4 | -- | 0,25 | 0,35 |
| Dihydropyridin ¹⁶⁾ (Stavinor D 507) | -- | -- | 0,25 | 0,4 |
| Zinklaurat ¹¹⁾ | -- | -- | -- | 0,3 |
| Σ | 3,31 | 3,6 | 4,1 | 4,65 |

| | | | | |
|---|---|---|---|---|
| ¹²⁾ Schlagzähmodifier auf Polyacrylat-Basis ¹³⁾ Ex COGNIS ¹⁴⁾ Ex CSC ¹⁵⁾ Ex PERSTORP ¹⁶⁾ Ex ARKEMA | | | | |

Formulierung G-2 ist erfindungsgemäß. Formulierungen H-2 entspricht dem veröffentlichten SdT und J-2 und K-2 entsprechen dem nichtvorveröffentlichten SdT.

Die Walzfelle aus den Formulierungen G-2, H-2, J-2 und K-2 wurden über ihre DHC-Werte wie folgt charakterisiert (Tab. 4.2).

**Tab. 4.2: DHC-Werte ( 190 °C) nach II, Walzfelle: 195 °C, nach I**

| Leitfähigkeit | G-2 | H-2 | J-2 | K-2 |
|---|---|---|---|---|
| [µS/cm] | [Min] | [Min] | [Min] | [Min] |
| 10 | 79 | 71 | 69 | 73 |
| 50 | 97 | 77 | 75 | 78 |
| 200 | 131 | 90 | 88 | 92 |

Erfindungsgemäß ist G-2. SdT sind H-2, J-2 und K-2. H-2 ist eine im Handel erhältliche Zusammensetzung eines Ca/Zn-Stabilisators (One-Pack I), die in der empfohlenen Richtkonzentration von 3,6 phr eingesetzt wurde. Onepack II entspricht Onepack I mit der Ausnahme, dass anstelle von Alkamizer P93 gewichtsgleiche Anteile von CAHC verwendet wurden.

Die Dehydrochlorierung zeigt, daß G-2 (CAHC in einer schwermetallfreien Formulierung) dem schwermetallhaltigen Handelsprodukt H-2 bei deutlich reduzierter Einsatzmenge (3,31 vs. 3,6phr) überlegen ist.

Ähnliches gilt für die Rezepturen J-2 und K-2, die CAHC in Kombination mit schwermetallhaltigen Kalzium-Zink-Seifen enthalten, und deren Wirkung durch weiteren Zusatz von Dipentaerythrit, Dihydropyridin und Zinklaurat optimiert wurde. Auch in diesem Vergleich sind die Gesamtkonzentrationsmengen erhöht (3,31phr vs. 4,1 bzw. 4,65phr).

Die Testung der Formulierungen G-2, H-2, J-2 und K-2 im Dauerwalztest zeigte folgendes Ergebnis (Tab. 4.3).

**Tab. 4.3: DWT (195 °C) nach IV**

| Zeit [Min] | G-2 [YI] | H-2 [YI] | J-2 [YI] | K-2 [YI] |
|---|---|---|---|---|
| 5 | 9,3 | 9,9 | 8,7 | 8,6 |
| 10 | 11,5 | 11,0 | 10,6 | 10,7 |
| 15 | 13,4 | 12,5 | 12,9 | 14,0 |
| 20 | 16,4 | 18,4 | 18,1 | 17,1 |
| 25 | 19,2 | 22,6 | 26,8 | 21,5 |
| 30 | 23,5 | 26,1 | 34,0 | 29,8 |
| 35 | 27,8 | 31,0 | 36,7 | 34,7 |
| 40 | 31,3 | 35,3 | 40,1 | 36,1 |
| 45 | 44,4 | 37,1 | 41,6 | 36,5 |
| 50 | 47,2 | 47,3 | 50,1 | 38,1 |
| 55 | 48,5 | 52,0 | 55,7 | 41,7 |
| 60 | 49,3 | -- | -- | 48,8 |

Auch hier zeigt der Vergleich von G-2 mit H-2 in der Fensterprofil-Rezeptur bei annäherndem gewichtsgleichen Einsatz (3,31 vs. 3,6phr) die Überlegenheit von G-2 im Hinblick auf AF, FH und LZ (also auf den gesamten Farbverlauf).

**Beispiel 5 (Hart-PVC,** Folienrezeptur):

Es wurden folgende Trockenpulvermischungen (Dryblends) angefertigt (Tab. 5.1).

**Tab. 5.1 Formulierungen**

| **Komponenten** | **L-2** | **M-2** |
|---|---|---|
| PVC (Vinnolit S3160) | 100 | 100 |
| K-Wert = 60 | | |
| Gleitmittel ¹⁰⁾ (Licolub WE 4 P) | 0,2 | 0,2 |
| ESBO ⁸⁾ (Lankroflex E 2414) | 3,0 | 3,0 |
| Calciumstearat ¹¹⁾ | 0,2 | 0,2 |
| Dihydropyridin ¹⁵⁾ (Stavinor D 507) | 0,4 | 0,4 |
| TEAP ²⁾ | 0,16 | 0,16 |
| CAHC ³⁾ | 1,0 | - |
| Sorbacid 911 ⁴⁾ | - | 1,0 |

Die Formulierung L-2 ist erfindungsgemäß, Formulierung M-2 entspricht dem SdT. Beide Formulierungen enthalten als AF-Verbesserer DHP und können somit direkt mit Beispiel 3 verglichen werden, das DMAU als AF-Verbesserer beinhaltet.

Die Formulierungen weisen folgende DHC-Werte auf (Tab. 5.2).

**Tab. 5.2: DHC-Werte (190 °C) nach II, Walzfell: 180 °C nach I**

| Leitfähigkeit | L-2 | M-2 |
|---|---|---|
| [µS/cm] | [Min] | [Min] |
| 10 | 92 | 79 |
| 50 | 112 | 97 |
| 200 | 158 | 131 |

Diese Daten zeigen sehr gut die Überlegenheit von L-2 gegenüber M-2. Die Testung der Rezepturen L-2 und M-2 im DWT ergab folgendes Ergebnis (Tab. 5.3).

**Tab. 5.3: DWT (180 °C) nach IV**

| Zeit [Min] | L-2 [YI] | M-2 [YI] |
|---|---|---|
| 5 | 6,9 | 23,0 |
| 10 | 8,5 | 41,7 |
| 15 | 10,8 | 53,6 |
| 20 | 14,2 | 67,1 |
| 25 | 21,5 | 70,8 |
| 30 | 33,1 | 79,6 |
| 35 | 48,5 | dunkelbraun |
| 40 | 55,4 | |
| 45 | 60,1 | |
| 50 | 64,6 | |
| 55 | 67,2 | |
| 60 | 73,4 | |
| 65 | dunkelbraun | |

Die Werte sprechen für eine signifikante Überlegenheit der erfindungsgemäßen Formulierung L-2 gegenüber der dem Stand der Technik entsprechenden Rezeptur M-2, sowohl in Bezug auf AF, FH und LZ. Überraschend ist hier im DWT der starke Wirkungsabfall von M-2 gegenüber Beispiel 3, das Sorbacid 911 (F-2) im SHT zeigt.

**Beispiel 6:** (Weich-PVC, Kabelrezeptur):

Folgende Dryblends wurden hergestellt (Tab. 6.1).

**Tab. 6.1 Formulierungen**

| Komponenten | N-2 | O-2 | P-2 | R-2 |
|---|---|---|---|---|
| PVC (Vinnolit S4170) K-Wert = 70 | 100 | 100 | 100 | 100 |
| Weichmacher ⁵⁾ (Palatinol N) | 50 | 50 | 50 | 50 |
| Kreide ⁷⁾ (Polcarb 50 SV ) | 50 | 50 | 50 | 50 |
| Irganox 1010 ¹⁶⁾ | 0,43 | 0,43 | 0,43 | 0,43 |
| Calciumsterat ¹¹⁾ | 0,79 | 0,79 | 0,79 | 0,79 |
| DMAU ¹⁾ | 0,2 | 0,2 | 0,2 | 0,2 |
| TEAP ²⁾ | 0,1 | 0,1 | 0,1 | 0,1 |
| CAHC ³⁾ | 2,58 | -- | -- | -- |
| Alcamizer P93 ¹⁷⁾ | -- | 2,58 | -- | -- |
| Sorbacid 911 ⁴⁾ | -- | -- | 2,58 | -- |
| Calciumhydroxid (Nekapur 2) ¹⁸⁾ | -- | -- | -- | 2,58 |

| | | | | |
|---|---|---|---|---|
| ¹⁶⁾ Antioxidans ex CSC; ¹⁷⁾ Hydrotalcit ex KYOWA (Alkamizer 4) ; ¹⁸⁾ Ex Kalkfabrik Netstal AG | | | | |

Formulierung N-2 ist erfindungsgemäß, O-2, P-2 und R-2 sind dem Stand der Technik entnommen. O-2 und P-2 sind als nächstliegender SdT zu betrachten. Die Formulierungen N-2, O-2 und P-2 weisen folgende DHC-Werte auf (Tab. 6.2).

**Tab. 6.2: DHC-Werte (200 °C) nach II, Walzfell: 190 °c nach I**

| Leitfähigkeit | N-2 | O-2 | P-2 |
|---|---|---|---|
| [µS/cm] | [Min] | [Min] | [Min] |
| 10 | 147 | 113 | 93 |
| 50 | 224 | 134 | 130 |
| 200 | 354 | 173 | 232 |

Vergleicht man N-2 mit O-2 und P-2, so ist eine Qualitätseinbuße feststellbar (Übergang zu kleineren Minutenwerten). Die Austestung der Rezepturen N-2, O-2 und P-2 (außerdem ist der SdT auf R-2 erweitert) zeigte im DWT folgendes Ergebnis (Tab. 6.3).

**Tab. 6.3: DWT (190 °C) nach IV**

| Zeit [Min] | N-2 [YI] | O-2 [YI] | P-2[YI] | R-2[YI] |
|---|---|---|---|---|
| 10 | 30,9 | 31,6 | 39,0 | 33,2 |
| 20 | 33,6 | 36,4 | 50,1 | 39,4 |
| 30 | 37,8 | 42,0 | 59,4 | 45,0 |
| 40 | 42,7 | 47,2 | 71,3 | 49,7 |
| 50 | 46,6 | 55,1 | 84,7 | 55,5 |
| 60 | 52,2 | 59,0 | 97,8 | 61,2 |
| 70 | 56,3 | 67,2 | 107,7 | 67,5 |
| 80 | 63,7 | 76,0 | 108,2 | 72,8 |
| 90 | 69,3 | 85,4 | dunkelbraun | 79,5 |
| 100 | 75,3 | 92,8 | | 86,2 |
| 110 | 80,8 | 99,0 | | 86,3 |
| 120 | 82,3 | 99,4 | | 86,8 |
| 130 | 83,2 | dunkelbraun | | 86,9 |
| 140 | 84,3 | | | 87,8 |

Wie ersichtlich, zeigt die erfindungsgemäße Kombination N-2 im DWT gegenüber dem nächstliegenden Stand der Technik O-2 und P-2 sowie gegenüber dem weiter entfernten SdT R-2 eine verbesserte Wirksamkeit in Bezug auf AF, FH und LZ.

## Patentansprüche

1. Stabilisatorsystem für halogenhaltige Polymere enthaltend als Komponente **(A)** Calcium-monocarbonato-hydroxodialuminat der Formel **(A)**
CaₘAl₂(OH)₆₊₂₍ₘ₋₁₎CO_{3*} n H₂O **(A),**
wobei **m** = 3,8 bis 4,2 und **n** = 0 bis 3 ist und
als Komponente **(B)** ein koordinationspolymeres Catena-2,2',2"-nitrilotrisethanol-perchlorato-Lithium oder -Natrium **(B1)** mit einer Monomereneinheit der Formel 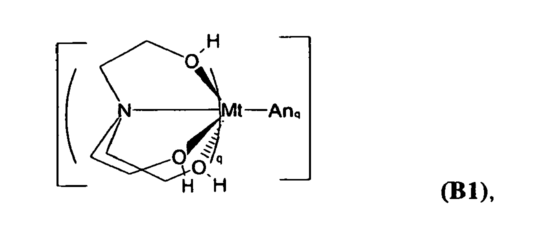 wobei **Mt** = Li oder Na, **An** = OClO₃ und **q** = 1 ist und/oder ein quaternäres oder ternäres Ammonium- oder Phosphoniumperchlorat **(B2).**

2. Stabilisatorsystem nach Anspruch 1, **dadurch gekennzeichnet, dass** (A) Tetracalcium-monocarbonato-dodecahydroxodialuminat (Hydrat) ist.

3. Stabilisatorsystem nach Anspruch 1 oder 2, **dadurch gekennzeichnet, dass (B1)** Catena-2,2',2"-nitrilotrisethanol-perchlorato-Natrium ist.

4. Stabilisatorsystem nach Anspruch 1 oder 2, **dadurch gekennzeichnet, dass (B2)** ein Perchlorat der Formel R¹R²₃XClO₄ ist, wobei **X** P oder N, **R¹** H oder **R²** und jedes **R²** unabhängig voneinander ein gesättigter oder ungesättigter, verzweigter oder unverzweigter cyclischer oder acyclischer oder sowohl cyclischer als auch acyclischer Kohlenwasserstoffrest mit 1 bis 20 Kohlenstoffatomen ist.

5. Stabilisatorsystem nach einem der Ansprüche 1 bis 4, **dadurch gekennzeichnet, dass** zusätzlich als Komonente **(C)** mindestens eine der Verbindungen ausgewählt aus der Gruppe bestehend aus einen subst. Cyanacetylharnstoff, einen subst. 6-Aminouracil, einem subst. 1,4-Dihydropyridin, einem 3-Aminocrotonsäureester und Calciumhydroxid enthalten ist.

6. Stabilisatorsystem nach Anspruch 5, **dadurch gekennzeichnet, dass** der subst. Cyanacetylharnstoff 1,3-Dimethyl-cyanacetylharnstoff, das subst. 6-Aminouracil 1,3-Dimethyl 6-aminouracil, 1,3-Diallyl 6-aminouracil oder ein 5,5'- [C₄-C₁₈-Alkyliden]-bis-1,3-dimethyl-6-aminouracil, das subst. 1,4-Dihydropyridin 2,6-Dimethyl-3,5- bis-carboxylauryl-1,4-dihydropyridin und der 3-Aminocrotonsäureester 1,4-Butandiyl-bis-3-aminocrotonat oder 2,2'-Thio-bis-ethandiyl-3-aminocrotonat ist.

7. Stabilisatorsystem nach Anspruch einem der Ansprüche 1 bis 6, **dadurch gekennzeichnet, dass** die Komponente **(B)** einen Anteil 1 bis 10 Gew.-% bezogen auf die Komponente **(A)** aufweist.

8. Zusammensetzung enthaltend ein halogenhaltiges Polymer und ein Stabilisatorsystem nach einem der Ansprüche 1 bis 7.

9. Zusammensetzung nach Anspruch 8, **dadurch gekennzeichnet, dass** die Verbindung der Formel **(A)** in einer Einsatzmenge von 0,01 bis 3,0phr, bevorzugt von 0,05 bis 1,5phr und besonders bevorzugt von 0,1 bis 1,0phr vorliegt.

10. Zusammensetzung nach Anspruch 8 oder 9, **dadurch gekennzeichnet, dass** Komponente **(C)** in einer Einsatzmange von 0,10 bis 10phr, bevorzugt von 0,01 bis 5,0phr und besonders bevorzugt von 0,01 bis 2,0phr vorliegt.

11. Zusammensetzung nach einem der Ansprüche 8 bis 10, **dadurch gekennzeichnet, dass** weiterhin mindestens eine der Verbindungen Magnesiumhydroxid und Erdalkaliseifen, Polyole oder Zuckeralkohole bzw. Tris-hydroxyethylisocyanurat (THEIC), Phosphorigsäureester, Glycidyl-Verbindungen, epoxidierte Fettsäureester, ster. gehinderte Amine (HALS), Antioxidantien, UV-Absorber und Lichtschutzmittel, optische Aufheller, Antistatika, Biozide, Pigmente, Füllstoffe, Treibmittel, Gleitmittel, Weichmacher, Schlagzähmodifikatoren und Verarbeitungshilfen enthalten sind.

12. Zusammensetzung nach einem der Ansprüche 8 bis 11, **dadurch gekennzeichnet, dass** das halogenhaltige Polymer ein chlorhaltiges Polymer, insbesondere PVC, ist.

13. Gegenstand enthaltend eine Zusammensetzung nach einem der Ansprüche 8 bis 12.

14. Gegenstand nach Anspruch 13, **dadurch gekennzeichnet, dass** dieser ein Holz-Kunstoff-Verbundwerkstoff (WPC = Wood Plastic Composite), eine Folie, ein Profil, Fußbodenbelag, ein KFZ-Teil, eine Wandtapete, ein Schlauch, ein Spritzgussteil oder eine Drahtummantelung ist.

15. Verwendung eines Stabilisatorsystems nach einem der Ansprüche 1 bis 7 zur Stabilisierung eines halogenhaltigen Polymers.

16. Verwendung einer Zusammensetzung nach einem der Ansprüche 8 bis 13 zur Herstellung eines Gegenstandes nach Anspruch 13 oder 14.

## Claims

1. A stabilizer system for halogen-containing polymers, comprising,
as component **(A),** calcium monocarbonatohydroxodialuminate of the formula **(A)**
CaₘAl₂(OH)₆₊₂₍ₘ₋₁₎CO_{3 *} n H₂O **(A),**
where **m** = from 3.8 to 4.2, and **n** = from 0 to 3, and,
as component **(B),** a catena-2,2',2"-nitrilotrisethanolperchloratolithium or -sodium coordination polymer **(B1)** having a monomer unit of the formula 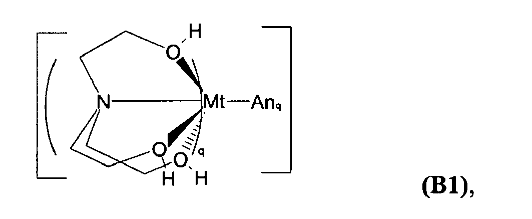 where **Mt** = Li or Na, **An** = OClO₃, and **q** = 1, and/or a quaternary or ternary ammonium or phosphonium perchlorate **(B2).**

2. The stabilizer system as claimed in claim 1, **characterized in that** (A) is tetracalcium monocarbonatododecahydroxodialuminate (hydrate).

3. The stabilizer system as claimed in claim 1 or 2, **characterized in that (B1)** is catena-2,2',2"-nitrilotrisethanolperchloratosodium.

4. The stabilizer system as claimed in claim 1 or 2, **characterized in that (B2)** is a perchlorate of the formula R¹R²₃XClO₄, where **X** is P or N, **R¹** is H or **R²**, and each **R²**, independently of the other, is a saturated or unsaturated, branched or unbranched cyclic or acyclic, or both cyclic and acyclic, hydrocarbon radical having from 1 to 20 carbon atoms.

5. The stabilizer system as claimed in any of claims 1 to 4, **characterized in that** it also comprises, as component **(C),** at least one of the compounds selected from the group consisting of a substituted cyanoacetylurea, a substituted 6-aminouracil, a substituted 1,4-dihydropyridine, a 3-aminocrotonic ester, and calcium hydroxide.

6. The stabilizer system as claimed in claim 5, **characterized in that** the substituted cyanoacetylurea is 1,3-dimethylcyanoacetylurea, the substituted 6-aminouracil is 1,3-dimethyl-6-aminouracil, 1,3-diallyl-6-aminouracil, or a 5,5'-[C₄-C₁₈-alkylidene]-bis-1,3-dimethyl-6-aminouracil, the substituted 1,4-dihydropyridine is 2,6-dimethyl-3,5-biscarboxylauryl-1,4-dihydropyridine, and the 3-aminocrotonic ester is 1,4-butanediyl bis-3-aminocrotonate or 2,2'-thiobisethanediyl 3-aminocrotonate.

7. The stabilizer system as claimed in any of claims 1 to 6, **characterized in that** the proportion of component **(B),** based on component **(A),** is from 1 to 10% by weight.

8. A composition comprising a halogen-containing polymer and a stabilizer system as claimed in any of claims 1 to 7.

9. The composition as claimed in claim 8, **characterized in that** the amount used of the compound of the formula (A) is from 0.01 to 3.0 phr, preferably from 0.05 to 1.5 phr, and particularly preferably from 0.1 to 1.0 phr.

10. The composition as claimed in claim 8 or 9, **characterized in that** the amount used of component (C) is from 0.10 to 10 phr, preferably from 0.01 to 5.0 phr, and particularly preferably from 0.01 to 2.0 phr.

11. The composition as claimed in any of claims 8 to 10, **characterized in that** it also comprises at least one of the following compounds: magnesium hydroxide and alkaline-earth-metal soaps, polyols or sugar alcohols or trishydroxyethyl isocyanurate (THEIC), phosphorous esters, glycidyl compounds, epoxidized fatty acid esters, sterically hindered amines (HALS), antioxidants, UV absorbers and light stabilizers, optical brighteners, antistatic agents, biocides, pigments, fillers, blowing agents, lubricants, plasticizers, impact modifiers, and processing aids.

12. The composition as claimed in any of claims 8 to 11, **characterized in that** the halogen-containing polymer is a chlorine-containing polymer, in particular PVC.

13. An article comprising the composition as claimed in any of claims 8 to 12.

14. The article as claimed in claim 13, **characterized in that** it is a wood-plastic-composite material (WPC = wood-plastic composite), a foil, a profile, a floorcovering, a motor-vehicle part, a wallcovering, a hose, an injection molding, or wire sheathing.

15. The use of a stabilizer system as claimed in any of claims 1 to 7 for the stabilization of a halogen-containing polymer.

16. The use of the composition as claimed in any of claims 8 to 13 for the production of an article as claimed in claim 13 or 14.

## Revendications

1. Système stabilisant pour polymères halogénés, contenant en tant que composant **(A)** du monocarbonato-hydroxodialuminate de calcium de formule **(A)**
CaₘAl₂(OH)₆₊₂₍ₘ₋₁₎CO₃ * n H₂O **(A),**
où **m** = 3,8 à 4,2 et **n** = 0 à 3 et
en tant que composant **(B)** un polymère de coordination *catena*-2,2',2"-nitrilotriséthanol-perchlorato-lithium ou -sodium (**B1**) comportant un motif monomère de formule 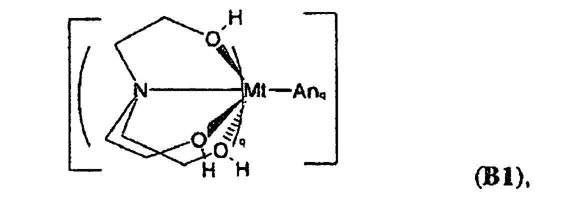 où **Mt** = Li ou Na, **An** = OClO₃ et **q** = 1 et/ou un perchlorate d'ammonium ou de phosphonium ternaire ou quaternaire **(B2).**

2. Système stabilisant selon la revendication 1, **caractérisé en ce que** (A) est le monocarbonato-dodécahydroxodialuminate de tétracalcium (hydrate).

3. Système stabilisant selon la revendication 1 ou 2, **caractérisé en ce que (B1)** est le *catena*-2,2',2"-nitrilotriséthanol-perchlorato-sodium.

4. Système stabilisant selon la revendication 1 ou 2, **caractérisé en ce que (B2)** est un perchlorate de formule **R¹R²**₃XClO₄, X étant P ou N, **R¹** étant H ou **R²** et chaque symbole **R²** étant, indépendamment des autres, un radical hydrocarboné saturé ou insaturé, ramifié ou non ramifié, cyclique ou acyclique ou aussi bien cyclique qu'acyclique, ayant de 1 à 20 atomes de carbone.

5. Système stabilisant selon l'une quelconque des revendications 1 à 4, **caractérisé en ce qu'**en outre est contenu en tant que composant **(C)** au moins l'un des composés choisis dans le groupe constitué par une cyanoacétylurée substituée, un 6-amino-uracile substitué, une 1,4-dihydropyridine substituée, un ester d'acide 3-aminocrotonique substitué et l'hydroxyde de calcium.

6. Système stabilisant selon la revendication 5, **caractérisé en ce que** la cyanoacétylurée substituée est la 1,3-diméthyl-cyanoacétylurée, le 6-amino-uracile substitué est le 1,3-diméthyl-6-amino-uracile, le 1,3-diallyl-6-amino-uracyle ou un 5,5'-[alkylidène(C₄-C₁₈)]-bis-1,3-diméthyl-6-amino-uracile, la 1,4-dihydropyridine substituée est la 2,6-diméthyl-3,5-bis-carboxylauryl-1,4-dihydropyridine et l'ester d'acide 3-aminocrotonique est le bis-3-aminocrotonate de 1,4-butanediyle ou le 3-aminocrotonate de 2,2'-thio-bis-éthanediyle.

7. Système stabilisant selon l'une quelconque des revendications 1 à 6, **caractérisé en ce que** le composant **(B)** est présent en une proportion de 1 à 10 % en poids par rapport au composant **(A).**

8. Composition contenant un polymère halogéné et un système stabilisant selon l'une quelconque des revendications 1 à 7.

9. Composition selon la revendication 8, **caractérisée en ce que** le composé de formule **(A)** est présent en une quantité initiale de 0,01 à 3,0 phr, de préférence de 0,05 à 1,5 phr et de façon particulièrement préférée de 0,1 à 1,0 phr.

10. Composition selon la revendication 8 ou 9, **caractérisée en ce que** le composant **(C)** est présent en une quantité initiale de 0,10 à 10 phr, de préférence de 0,01 à 5,0 phr et de façon particulièrement préférée de 0,01 à 2,0 phr.

11. Composition selon l'une quelconque des revendications 8 à 10, **caractérisée en ce qu'**en outre elle contient au moins l'un des composés hydroxyde de magnésium et savons alcalino-terreux, polyols ou alcools dérivés de sucres ou isocyanurate de tri-hydroxyéthyle (THEIC), esters d'acide phosphoreux, composés glycidyliques, esters d'acides gras époxydés, amines à empêchement stérique (HALS), antioxydants, absorbeurs UV et photoprotecteurs, azurants optiques, agents antistatiques, biocides, pigments, charges, agents d'expansion, lubrifiants, plastifiants, modificateurs de la résistance au choc et adjuvants de mise en oeuvre.

12. Composition selon l'une quelconque des revendications 8 à 11, **caractérisée en ce que** le polymère halogéné est un polymère chloré, en particulier le PVC.

13. Article contenant une composition selon l'une quelconque des revendications 8 à 12.

14. Article selon la revendication 13, **caractérisé en ce qu'**il s'agit d'un matériau composite bois-matière plastique (WPC = Wood Plastic Composite), d'un film, d'un profilé, d'un revêtement de sol, d'une pièce d'automobile, d'un papier-peint, d'un tuyau souple, d'une pièce moulée par injection ou d'une gaine de fil.

15. Utilisation d'un système stabilisant selon l'une quelconque des revendications 1 à 7, pour la stabilisation d'un polymère halogéné.

16. Utilisation d'une composition selon l'une quelconque des revendications 8 à 13, pour la fabrication d'un article selon la revendication 13 ou 14.
